# EUROPÄISCHE PATENTSCHRIFT

(11) **EP 3 653 895 B1**
(45) Veröffentlichungstag und Bekanntmachung des Hinweises auf die Patenterteilung: **14.07.2021**
(21) Anmeldenummer: 18206526.8
(22) Anmeldetag: 15.11.2018
(51) Int. Cl.: F16C 32/06

(54) **AEROSTATISCHES LAGER**
AEROSTATIC BEARING
PALIER AÉROSTATIQUE

(43) Veröffentlichungstag der Anmeldung: 20.05.2020
(73) Patentinhaber: ETEL S.A., 2112 Môtiers (CH)
(72) Erfinder: MAAMARI, Nadim, 2013 Colombier (CH)
(74) Vertreter: Pleyer, Hans Anno

(56) Entgegenhaltungen:
- EP-A1- 0 065 337
- EP-A1- 2 251 556
- EP-A2- 0 143 471
- DE-A1- 2 544 872
- NL-C1- 1 022 964
- US-B2- 8 803 644

## Beschreibung

### GEBIET DER TECHNIK

Die vorliegende Erfindung betrifft das Gebiet der aerostatischen Lager. Insbesondere betrifft die Erfindung ein aerostatisches Lager, das an verschiedene Anforderungen anpassbar ist. Es kann beispielsweise so ausgelegt werden, dass zwar das Gewicht einer Last gehalten wird, dabei aber Schwingungen des Untergrunds nicht auf die Last übertragen werden.

### STAND DER TECHNIK

Aerostatische Lager werden in hochgenauen Positioniereinrichtungen eingesetzt, insbesondere in der Halbleiterfertigung und -prüfung. Die Abwesenheit von Stick-Slip-Effekten in aerostatischen Lagern führt zu einer präzisen und wiederholbaren Bewegung. Aerostatische Lager bewahren eine saubere Umgebung, da sie keine Ölschmierung benötigen und keinen Abrieb produzieren. Sie bestehen aus zwei Teilen: einer Führungsfläche (die normalerweise mit einer geringen Oberflächenrauhigkeit geläppt wird), auf der ein Gleitstück (auch als Pad bezeichnet) mit einer Druckluftversorgung gleitet. Auf einer unteren, der Führungsfläche zugewandten Gleitfläche des Gleitstücks befinden sich eine oder mehrere Öffnungen (Einlassbegrenzer), durch die die Luft strömt. Aerostatische Lager werden im Allgemeinen nach dem Typ des Einlassbegrenzers klassifiziert. Diejenigen mit einer zentral gespeisten Öffnung werden aufgrund ihrer einfachen Herstellung besonders häufig eingesetzt. Zum Betrieb des Lagers wird Druckluft in das Gleitstück gepresst. Die Öffnung in der Gleitfläche wirkt als Einlassbegrenzung, die Auslassbegrenzung besteht aus dem dünnen Spalt zwischen der Führungsfläche und der Unterseite des Gleitstücks. Das Be- und Entlasten des Gleitstücks verändert die Druckverteilung im Luftspalt, die sich aus der Änderung der Spalthöhe und dem Druck am Einlassbegrenzer ergibt.

Aus der nicht vorveröffentlichten Anmeldung mit der Anmeldenummer EP17192381.6 der Anmelderin, von der diese Anmeldung ausgeht, ist ein aktives aerostatisches Lager bekannt, umfassend eine Gleitfläche mit einem zentralen Lufteinlass, der eine Öffnung beinhaltet, die als Einlassbegrenzer für Druckluft wirkt. Zwischen einer Führungsfläche und einer Gleitfläche bildet sich ein Luftspalt. Das aktive aerostatische Lager umfasst zudem ein Kraftstellglied, das die Gleitfläche verformt und damit die Form des Luftspaltes verändert. Das Stellglied bewirkt dabei eine konusförmige Verformung der Gleitfläche. Damit kann in weiten Grenzen das mechanische Verhalten und der Luftspalt dieses aktiven Luftlagers eingestellt werden.

Bekannte aerostatische Lager sind allerdings weniger gut zur Schwingungsisolation geeignet, da ähnlich wie bei einer Feder ein Zusammenhang zwischen der Größe des Luftspalts und der vom Gleitstück getragenen Last besteht. Schwingungen des Untergrunds (der Führungsfläche) übertragend sich daher auch auf das Gleitstück bzw. auf die vom Gleitstück getragene Last. Dies erschwert eine hochgenaue Positionierung und erfordert zusätzliche Maßnahmen zur Schwingungsisolierung.

Aus der US 8803644 B2 sind außerdem Stellantriebe bekannt, die sich die Kombination einer mechanischen mit einer magnetischen Feder zunutze machen. Hierbei kann die Schwerkraft einer beweglichen Baueinheit durch die Federkräfte kompensiert werden, wobei sich die Federkonstanten der beiden Federn gegenseitig aufheben, und so im Arbeitsbereich des Stellantriebs ein kräftefreies Verschieben der beweglichen Baueinheit möglich ist. Hierdurch wird auch die Übertragung von Vibrationen zwischen ortsfester und beweglicher Baueinheit vermieden, was für eine exakte Positionierung von Vorteil ist. EP 2 251 556 A1 zeigt ein gattungsgemäßes aerostatisches Lager.

### ZUSAMMENFASSUNG DER ERFINDUNG

Es ist Aufgabe der Erfindung, ein aerostatisches Lager zu schaffen, dessen Anwendungsbereich im Vergleich zu den bekannten aerostatischen Lagern erweitert ist.

Diese Aufgabe wird gelöst durch eine Vorrichtung gemäß Anspruch 1. Vorteilhafte Details dieser Vorrichtung ergeben sich auch aus den von Anspruch 1 abhängigen Ansprüchen.

Es wird ein aerostatisches Lager mit einem Gleitstück offenbart, das auf einer Führungsfläche geführt ist. Das Lager weist eine der Führungsfläche zugewandte innere, konusförmige Gleitfläche eines inneren Luftlagers mit einer zentralen Druckluftzufuhr auf, wobei die konusförmige Gleitfläche mittels ersten Gelenken an der zentralen Druckluftzufuhr und mittels zweiten Gelenken an einer der Führungsfläche abgewandten Seite des Gleitstücks angeordneten Basis des Gleitstücks befestigt ist, so dass ein Konuswinkel der konusförmigen Gleitfläche veränderlich ist. Die konusförmige Gleitfläche ist von einer ringförmigen Gleitfläche eines äußeren Luftlagers umgeben, die eine ringförmige Druckluftzufuhr aufweist.

Durch die Kombination eines inneren und eines äußeren Luftlagers lassen sich nun völlig neue Anwendungsgebiete solcher Luftlager erschließen. Wie weiter unten noch gezeigt wird, kann das innere Luftlager so ausgelegt werden, dass es für sich alleine betrachtet eine negative Steifigkeit aufweist.

Dies bedeutet, dass der Luftspalt des Lagers bei zunehmender Belastung entgegen der anschaulichen Erwartung nicht kleiner, sondern größer wird. Dies ist möglich dank der gelenkigen Befestigung der konusförmigen Gleitfläche und der Tatsache, dass sich mit der Belastung des Lagers auch der Konuswinkel ändert. Die Gelenke bilden zusammen mit der konusförmigen Gleitfläche eine Torsionsfeder, die durch den im Luftlager herrschenden Druck ausgelenkt wird. Ist die Federkonstante dieser Torsionsfeder klein genug, kann eine zusätzliche Kraft auf das Lager die konusförmige Gleitfläche so stark auslenken, dass der Luftspalt zunimmt.

Das äußere, ringförmige Luftlager weist demgegenüber eine positive Steifigkeit auf, so dass in Summe eine kleine oder sogar verschwindende Steifigkeit für diese Kombination zweier Luftlager möglich ist. Dies bedeutet, dass vom Luftlager eine Last z.B. gegen die Schwerkraft gehalten werden kann, wobei eine Änderung des Luftspalts praktisch kräftefrei erfolgt. Schwingungen des Untergrunds (der Führungsfläche) werden so nicht auf die Last übertragen.

In einem erweiterten Ausführungsbeispiel sorgt ein zusätzlicher Aktuator, mit dem der Konuswinkel des inneren Luftlagers beeinflusst werden kann, außerdem für ein in weiten Grenzen einstellbares mechanisches Verhalten des aerostatischen Lagers, wobei zwischen einer quasi unendlichen Steifigkeit bis zu einer verschwindenden Steifigkeit jeder beliebige Wert eingestellt werden kann, bzw. zwischen diesen beiden Zuständen umgeschaltet werden kann. Das Luftlager wirkt dann als Präzisionskupplung. Durch eine aktive Regelung des Luftspalts kann sogar eine aktive Schwingungsdämpfung erfolgen, die separate schwingungsisolierende Systeme überflüssig machen kann.

Weitere Vorteile und Einzelheiten der vorliegenden Erfindung ergeben sich aus der nachfolgenden Beschreibung verschiedener Ausführungsformen anhand der Figuren.

### KURZE BESCHREIBUNG DER ZEICHNUNGEN

Dabei zeigt
- Figur 1: eine schematische Darstellung einer ersten Ausführungsform eines aerostatischen Lagers, sowie eine Darstellung des Drucks im Luftspalt dieses Lagers,
- Figur 2: den Zusammenhang zwischen der Kraft auf das Lager und dem Luftspalt für verschiedene mechanische Auslegungen des Lagers,
- Figur 3: eine Erklärung für das Verhalten des Lagers bei negativer Steifigkeit,
- Figur 4: den Effekt einer Kombination zweier Luftlager mit Steifigkeiten mit entgegengesetztem Vorzeichen,
- Figur 5: eine schematische Darstellung einer zweiten, um einen Aktuator erweiterte Ausführungsform des aerostatischen Lagers,
- Figur 6: einen Schnitt durch ein aerostatisches Lager gemäß der zweiten Ausführungsform.

### BESCHREIBUNG DER AUSFÜHRUNGSFORMEN

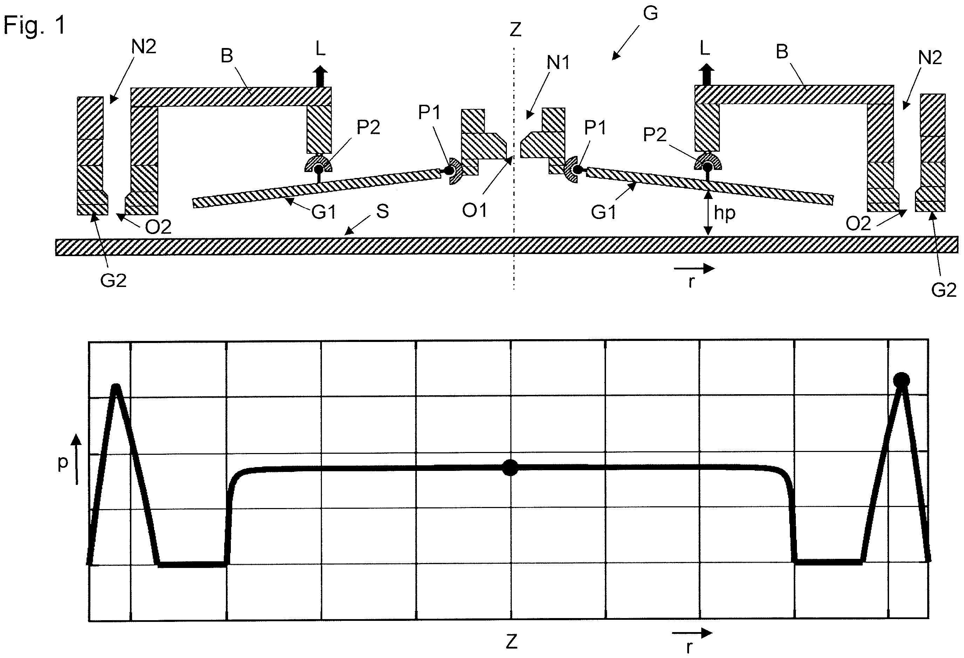

Die Figur 1 zeigt schematisch ein erstes Ausführungsbeispiel eines aerostatischen Lagers. Ein Gleitstück G des aerostatischen Lagers läuft auf einer Führungsfläche S. Dabei wird eine Last L gehalten. Oft muss das Gleitstück G das Gewicht der Last L tragen, letztlich also eine der Schwerkraft der Last L entgegengesetzte Kraft aufbringen. Hierzu weist das Gleitstück G eine Gleitfläche G1 auf, die im Gegensatz zu herkömmlichen Luftlagern nicht parallel zur Führungsfläche S ausgerichtet ist, sondern die Form eines flachen Kegels aufweist. Es handelt sich um eine konusförmige Gleitfläche G1, in deren Zentrum Z eine Druckluftzufuhr N1 in Form einer Düse mit einer Öffnung O1 angeordnet ist, durch die Druckluft zwischen die konusförmige Gleitfläche G1 und die Führungsfläche S gepresst wird.

Die konusförmige Gleitfläche G1 ist mittig über ein oder mehrere erste Gelenke P1 an der zentralen Druckluftzufuhr N1, sowie über ein oder mehrere Gelenke P2 an einer Basis B des Luftlagers befestigt. Die Basis B trägt dabei die Last L. Die zweiten Gelenke P2 sind in etwa bei 2/3 des Radius der konusförmigen Gleitfläche G1 angeordnet. An dieser Stelle wird auch die Größe des Luftspalts hp gemessen, denn eine Änderung dieses Luftspalts hp um einen bestimmten Betrag hebt oder senkt die Basis B und damit die Last L um genau diesen Betrag. An anderen Stellen der konusförmigen Gleitfläche G1 ist dies nicht unbedingt gegeben, denn aufgrund der ersten und zweiten Gelenke P1, P2 kann sich der Konuswinkel verändern, ohne dass sich dadurch notwendiger Weise der Luftspalt hp verändert. Mit Konuswinkel wird der Winkel der ersten Gleitfläche G1 zu einer Symmetrieachse durch das Zentrum Z der ersten Gleitfläche G1 bezeichnet, die durch die gedachte Spitze des Konus bzw. Kegels läuft und senkrecht auf der Führungsfläche S steht. Ein Konuswinkel von 90° würde also eine zur Führungsfläche S parallel liegende Gleitfläche G1 ergeben. Tatsächlich ist der Konuswinkel etwas kleiner als 90° gewählt und liegt in einem Bereich von ca. 88°- 90°.

Die ersten und zweiten Gelenke P1, P2 sind vorzugsweise als Biegegelenke ausgebildet, so dass die Gleitfläche G1 wie eine Torsionsfeder wirkt.

Die Führungsfläche S und die konusförmige Gleitfläche G1 bilden zusammen mit der Druckluftzufuhr N1 ein inneres Luftlager. Dieses innere Luftlager ist von einem äußeren Luftlager ringförmig umgeben. Hierzu ist um das innere Luftlager eine ringförmige Gleitfläche G2 angeordnet, in der eine ringförmige Druckluftzufuhr N2 mit Öffnungen O2 für ein zusätzliches Luftpolster zwischen der ringförmigen Gleitfläche G2 und der Führungsfläche S sorgt. Ringförmig soll hier so verstanden werden, dass um das innere Luftlager herum ausreichend große Gleitflächen G2 und ausreichend viele Düsen N2 für eine zum Zentrum Z des Gleitstücks G symmetrische Lagerung der Last L sorgen. Hierfür mögen bereits drei in Abständen von 120° angeordnete Düsen N2 in entsprechend dimensionierten Gleitflächen G2 ausreichen, bevorzugt ist aber eine tatsächlich ringförmig umlaufende Gleitfläche G2 mit einer Vielzahl von Düsen N2, beispielsweise acht Düsen N2.

In der unteren Hälfte der Figur 1 ist gezeigt, wie sich der Druck p im Luftspalt hp dieses aerostatischen Lagers in Abhängigkeit von der radialen Position r einstellt. Im Bereich des inneren Luftlagers, unterhalb der konusförmigen Gleitfläche G1 stellt sich wegen der Nachgiebigkeit der konusförmigen Gleitfläche G1 (genauer gesagt wegen der Elastizität der ersten und zweiten Biegegelenke P1, P2) ein radial konstanter Druck ein, der erst am äußeren Rand der konusförmigen Gleitfläche G1 stark abfällt. Im Bereich des äußeren Luftlagers ergibt sich demgegenüber ein von der Druckluftzufuhr N2 zu den Rändern der ringförmigen Gleitfläche G2 linear abfallender Druck.

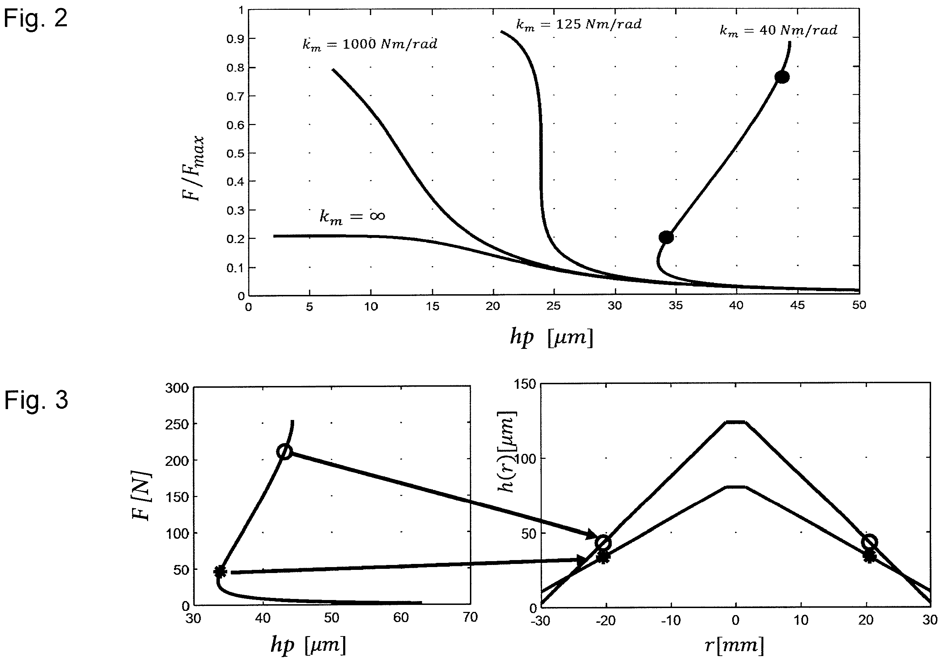

Bezüglich des inneren Luftlagers lässt sich nun feststellen, dass die konusförmige Führungsfläche G1 zusammen mit den ersten und zweiten Gelenken P1, P2 einige interessante Eigenschaften bewirkt. In der Figur 2 ist ein Diagramm gezeigt, das den Zusammenhang zwischen der Kraft F (bezogen auf eine Maximalkraft Fₘₐₓ) auf das Lager und dem Luftspalt hp für verschiedene mechanische Auslegungen des Lagers darstellt.

Durch die ersten und zweiten Biegegelenke P1, P2 kann man der konusförmigen Gleitfläche G1 die Federsteifigkeit km einer Torsionsfeder zuordnen, die angibt, welches Drehmoment notwendig ist, um den Konuswinkel um ein gewisses Maß zu verändern. Die Einheit dieser Federsteifigkeit km ist daher Drehmoment in Newtonmeter pro Winkeländerung im Bogenmaß (Nm/rad). Eine gewünschte Federsteifigkeit km lässt sich durch Auslegung der Biegegelenke P1, P2 erreichen.

Im Beispiel der Figur 2 ist zu erkennen, dass sich für Federsteifigkeiten km oberhalb von 125 Nm/rad eine positive Steifigkeit des inneren Luftlagers ergibt. Je kleiner die Kraft auf das Gleitstück G, desto größer ist der Luftspalt hp. Für eine Federsteifigkeit von km = 125 Nm/rad ändert sich der Luftspalt hp über einen weiten Bereich der Kraft nicht, das innere Luftlager ist in diesem Bereich unendlich steif. Legt man die Biegegelenke P1, P2 jedoch besonders weich aus, so dass sich eine Federsteifigkeit km von nur noch 40Nm/rad ergibt, zeigt das innere Luftlager einen Bereich mit negativer Steifigkeit: Erhöht man die Kraft auf das Gleitstück G, so wird auch der Luftspalt hp größer, und umgekehrt. Durch die Verbiegung der Torsionsfeder wird die Änderung der Last überkompensiert.

In der Figur 3 ist dargestellt, wie dieses zunächst nicht erwartete Verhalten zustande kommt. In der linken Hälfte der Figur 3 ist ein Ausschnitt aus der mit km = 40Nm/rad bezeichneten Kurve der Figur 2 gezeigt, wobei zwei Punkte besonders markiert sind: in einem Punkt beträgt die Kraft F auf das innere Luftlager 50N bei einem Luftspalt hp von 34µm, in einem anderen Punkt beträgt die Kraft 210N und der Luftspalt hp beträgt 43µm. Die rechte Hälfte der Figur 3 zeigt den Verlauf h(r) der konusförmigen Gleitfläche G1, die einen Radius von 30mm aufweist. Die zweiten Gelenke P2 sitzen bei einem Radius von 20mm, und dort wird auch die Größe des Luftspalts hp bestimmt, wie oben erklärt. Man erkennt, dass der bei größerer Kraft größere Luftspalt hp auf die Verformung der konusförmigen Gleitfläche G1 zurückzuführen ist, deren Konuswinkel sich zu kleineren Werten verändert, wenn die Last L größer wird.

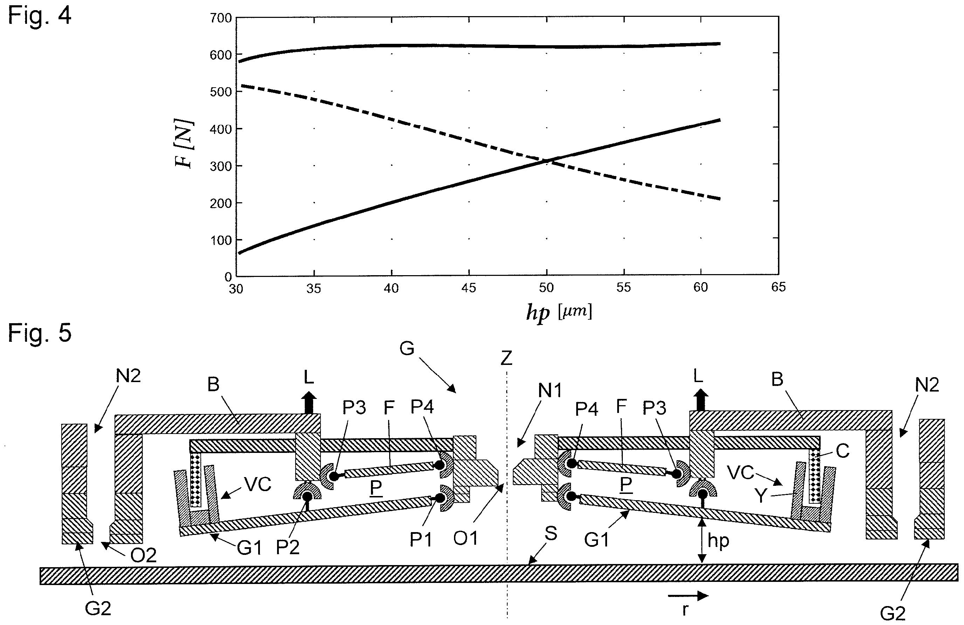

In der Figur 4 ist gezeigt, wie sich eine positive Steifigkeit des ringförmigen, äußeren Luftlagers (gestrichelte, abfallende Linie) und eine negative Steifigkeit des inneren Luftlagers (durchgezogene, ansteigende Linie) bei geeigneter Auslegung der beiden Luftlager (also betragsmäßig gleiche Steifigkeiten bei entgegensetztem Vorzeichen) zu einem Luftlager kombinieren lassen, dessen Luftspalt hp sich ohne eine Änderung der Kraft verändern lässt. Anders gesagt, die Steifigkeit des Luftlagers, die sich aus der Steigung der oberen Kurve ergibt, ist Null bzw. verschwindend klein. Werte kleiner als 1N/µm sind zur Schwingungsisolation bereits nützlich, mit einem gut abgestimmten System sind aber auch Werte kleiner als 0,1N/µm bis hin zu 0N/µm erreichbar. Das bedeutet, dass das Gleitstück G zwar eine gewisse Last (im Beispiel ca. 600N, zusammengesetzt aus der ggf. auf mehrere Gleitstücke verteilten Gewichtskraft der Applikation und einer Vorspannung des Luftlagers) tragen kann, dass aber Vibrationen der Führungsfläche S, die sich in einer Änderung des Luftspalts hp zeigen, nicht auf die Last L übertragen werden - und umgekehrt. Damit wird eine besonders genaue Positionierung der Last L in der Ebene der Führungsfläche S ermöglicht.

Diese Kombination des inneren und äußeren Luftlagers zu einem aerostatischen Lager mit verschwindend kleiner Steifigkeit ist nur ein Beispiel für eine nützliche Auslegung dieser Kombination. Indem das innere Luftlager mit anderen Federsteifigkeiten km ausgelegt wird, lassen sich auch andere Anwendungen bedienen. So ein aerostatisches Lager ist dann aber auf eine bestimmte Anwendung beschränkt.

In einem zweiten Ausführungsbeispiel soll daher ein erweitertes aerostatisches Lager beschrieben werden, das an verschiedene Anforderungen anpassbar ist. Die Figur 5 zeigt zunächst wieder das aus der Figur 1 schon bekannte aerostatische Lager mit einem inneren Luftlager mit konusförmiger Gleitfläche G1 und einem äußeren, ringförmigen Luftlager mit ringförmiger Gleitfläche G2. Die weiteren bereits aus der Figur 1 bekannten Elemente werden hier nicht erneut beschrieben. Zusätzlich ist in diesem Ausführungsbeispiel ein Aktuator VC eingebaut, mit dem der Konuswinkel der konusförmigen Gleitfläche G1 verändert werden kann. Beim Aktuator VC kann es sich beispielsweise um einen Voice Coil Motor handeln. Dieser weist ein U-förmiges Joch Y auf, das mit Magneten besetzt ist. Im Joch Y ist eine ringförmige Spule C angeordnet. Fließt ein Strom durch diese Spule C, bewirkt die Lorentzkraft des Magnetfelds der Magnete auf die bewegten Ladungsträger in der Spule C eine Kraft, die die Spule C je nach Stromrichtung aus dem Joch Y drückt oder in das Joch Y hinein zieht. Zwei zusätzliche Gelenke P3, P4, die ebenfalls als Biegegelenke ausgeführt und an der Druckluftzufuhr N1 bzw. an der Basis B angeordnet sind, und eine zusätzliche Verbindung F zwischen dem dritten und vierten Gelenk P3, P4 bilden mit der konusförmigen Gleitfläche G1 und den ersten und zweiten Gelenken P1, P2 ein Parallelogramm P, dessen Eckwinkel mit dem Aktuator VC beeinflusst werden können.

Mit einer Servo-Regelung für den mittels eines Dehnungsmessstreifens gemessenen Konuswinkel kann die Federsteifigkeit km der konusförmigen Gleitfläche G1 in weiten Grenzen verändert werden. Beträgt diese Federsteifigkeit ohne Aktuator VC bzw. ohne Strom in der Spule C km = 40 Nm/rad wie im ersten Ausführungsbeispiel, kann durch geeignete Ansteuerung der Spule C auch eine Federsteifigkeit von km = 125 Nm/rad eingestellt werden, so dass das innere Luftlager eine unendliche Steifigkeit (also keine Änderung des Luftspalts hp bei Änderung der Last) aufweist. Damit ist die Steifigkeit des gesamten aerostatischen Lagers unendlich, denn eine unendliche Steifigkeit des inneren Luftlagers kombiniert mit einer endlichen Steifigkeit des äußeren Luftlagers ergibt in Summe eine unendliche Steifigkeit. Das aerostatische Lager des zweiten Ausführungsbeispiels ist also zwischen den Betriebszuständen "verschwindend kleine Steifigkeit" (nützlich, wenn die Last L in Ruhe ist oder sich mit konstanter Geschwindigkeit bewegt, und dabei sehr genau positioniert werden muss) und "unendliche Steifigkeit" (nützlich, wenn die Last zur schnellen Positionierung stark beschleunigt werden soll, und die exakte Positionierung nicht entscheidend ist) umschaltbar, oder es lassen sich beliebige Zustände dazwischen einstellen.

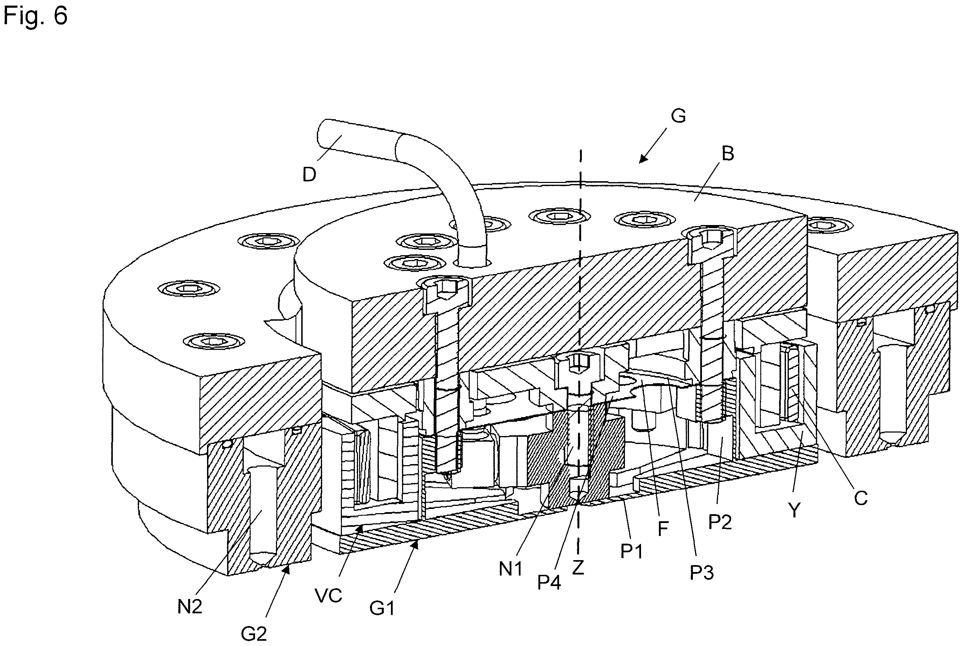

In der Figur 6 ist schließlich ein Schnitt durch ein auskonstruiertes Beispiel eines aerostatischen Lagers gemäß dem zweiten Ausführungsbeispiel gezeigt. Man erkennt einen Druckluftschlauch D, der an die zentrale Druckluftzufuhr N1 angeschlossen ist, und die konusförmige Gleitfläche G1 des inneren Luftlagers, sowie die ringförmige Gleitfläche G2 mit zwei (von mehreren) ringförmig angeordneten Düsen N2. Die dritten und vierten Gelenke P3, P4 bzw. das Parallelogramm P sind durch eine elastische, scheibenförmige Blattfeder F zwischen den dritten und vierten Gelenken P3, P4 realisiert. Auch die Schwachstellen, die die ersten und zweiten Biegegelenke P1, P2 bilden, sind gut zu erkennen. Der Aufbau des inneren Luftlagers entspricht somit dem Aufbau des in der oben genannten Anmeldung EP17192381.6 der Anmelderin gezeigten Luftlagers, und ist dort anhand der Figuren 5 - 6 im Detail beschrieben.

Zusammenfassend ist durch die Kombination eines inneren und eines äußeren Luftlagers ein aerostatisches Lager geschaffen, das durch geeignete Auslegung des inneren Luftlagers an verschiedenste Anforderungen angepasst werden kann. Insbesondere die Kombination zweier Steifigkeiten, die bei unterschiedlichem Vorzeichen betragsmäßig gleich sind, führt zu einem Lager, das eine Last schwingungsisoliert tragen kann.

## Patentansprüche

1. Aerostatisches Lager mit einem Gleitstück (G), das auf einer Führungsfläche (S) geführt ist, mit einer der Führungsfläche (S) zugewandten inneren, konusförmigen Gleitfläche (G1) eines inneren Luftlagers mit einer zentralen Druckluftzufuhr (N1), wobei die konusförmige Gleitfläche (G1) mittels erster Gelenke (P1) an der zentralen Druckluftzufuhr (N1) und mittels zweiter Gelenke (P2) an einer der Führungsfläche (S) abgewandten Seite des Gleitstücks (G) angeordneten Basis (B) des Gleitstücks (G) befestigt ist, so dass ein Konuswinkel der konusförmigen Gleitfläche (G1) veränderlich ist, **dadurch gekennzeichnet, dass** die konusförmige Gleitfläche (G1) von einer ringförmigen Gleitfläche (G2) eines äußeren Luftlagers umgeben ist, die eine ringförmige Druckluftzufuhr (N2) aufweist.

2. Aerostatisches Lager nach Anspruch 1, **dadurch gekennzeichnet, dass** das innere Luftlager eine negative Steifigkeit aufweist, während das äußere Luftlager eine positive Steifigkeit aufweist.

3. Aerostatisches Lager nach Anspruch 2, **dadurch gekennzeichnet, dass** die Steifigkeit des aerostatischen Lagers als Summe der negativen Steifigkeit und der positiven Steifigkeit kleiner als 1N/µm, bevorzugt kleiner als 0,1 N/µm ist.

4. Aerostatisches Lager nach einem der vorhergehenden Ansprüche, **dadurch gekennzeichnet, dass** der Konuswinkel der konusförmigen Gleitfläche (G1) durch einen Aktuator (VC) verstellbar ist.

5. Aerostatisches Lager nach Anspruch 4, **dadurch gekennzeichnet, dass** der Aktuator (VC) auf ein aus dem ersten und zweiten Gelenk (P1, P2) sowie aus einem dritten und vierten Gelenk (P3, P4) geformtes Parallelogramm (P) einwirkt, das durch den Aktuator (VC) verformt wird, wobei die konische Gleitfläche (G1) eine Seite des Parallelogramms (P) bildet und eine Blattfeder (F) eine der ersten Seite gegenüberliegende zweite Seite des Parallelogramms (P) bildet.

6. Aerostatisches Lager nach Anspruch 4 oder 5, **dadurch gekennzeichnet, dass** der Aktuator (VC) ein Voice Coil Motor ist.

7. Aerostatisches Lager nach Anspruch 6, **dadurch gekennzeichnet, dass** der Voice Coil Motor (VC) ein U-förmiges Joch (Y) mit Magneten aufweist, das mit der konusförmigen Gleitfläche (G1) verbunden ist, sowie eine im U-förmigen Joch (Y) beweglich angeordnete, ringförmige Spule (C), die mit der zentralen Druckluftzufuhr (N1) verbunden ist.

8. Aerostatisches Lager nach einem der vorhergehenden Ansprüche, **dadurch gekennzeichnet, dass** die Gelenke (P1, P2, P3, P4) Biegegelenke sind.

## Claims

1. Aerostatic bearing having a sliding piece (G) which is guided on a guiding face (S), having an inner, conical sliding face (G1) of an inner pneumatic bearing with a central compressed air supply (N1), which sliding face faces the guiding face (S), wherein the conical sliding face (G1) is secured by means of first joints (P1) to the central compressed air supply (N1) and by means of second joints (P2) to a base (B) of the sliding piece (G) which is arranged at a side of the sliding piece (G) facing away from the guiding face (S) so that a cone angle of the conical sliding face (G1) can be changed, **characterised in that** the conical sliding face (G2) is surrounded by an annular sliding face (G2) of an outer pneumatic bearing which has an annular compressed air supply (N2).

2. Aerostatic bearing according to Claim 1, **characterised in that** the inner pneumatic bearing has a negative rigidity, whilst the outer pneumatic bearing has a positive rigidity.

3. Aerostatic bearing according to Claim 2, **characterized in that** the rigidity of the aerostatic bearing as a sum of the negative rigidity and the positive rigidity is less than 1 N/µm, preferably less than 0.1 N/µm.

4. Aerostatic bearing according to any one of the preceding claims, **characterised in that** the cone angle of the conical sliding face (G1) can be adjusted by means of an actuator (VC).

5. Aerostatic bearing according to Claim 4, **characterised in that** the actuator (VC) acts on a parallelogram (P) which is formed from the first and second joint (P1, P2) and from a third and fourth joint (P3, P4) and which is deformed by the actuator (VC), wherein the conical sliding face (G1) forms one side of the parallelogram (P) and a leaf spring (F) forms a second side of the parallelogram (P) opposite the first side.

6. Aerostatic bearing according to Claim 4 or 5, **characterised in that** the actuator (VC) is a Voice Coil Motor.

7. Aerostatic bearing according to Claim 6, **characterised in that** the Voice Coil Motor (VC) has a U-shaped yoke (Y) with magnets which is connected to the conical sliding face (G1) and an annular coil (C) which is movably arranged in the U-shaped yoke (Y) and which is connected to the central compressed air supply (N1).

8. Aerostatic bearing according to any one of the preceding claims, **characterised in that** the joints (P1, P2, P3, P4) are bending joints.

## Revendications

1. Palier aérostatique comprenant une pièce coulissante (G) qui est guidée sur une surface de guidage (S), comprenant une surface de glissement (G1) conique intérieure, tournée vers la surface de guidage (S), d'un palier d'air intérieur doté d'une arrivée d'air comprimé centrale (N1), la surface de glissement conique (G1) étant fixée au moyen de premières articulations (P1) à l'arrivée d'air comprimé centrale (N1) et au moyen de deuxièmes articulations (P2) à une base (B) de la pièce coulissante (G), disposée sur un côté, détourné de la surface de guidage (S), de la pièce coulissante (G) de sorte qu'un angle de conicité de la surface de glissement conique (G1) est variable, **caractérisé en ce que** la surface de glissement conique (G1) est entourée d'une surface de glissement annulaire (G2) d'un palier à air extérieur qui présente une arrivée d'air comprimé annulaire (N2).

2. Palier aérostatique selon la revendication 1, **caractérisé en ce que** le palier à air intérieur présente une rigidité négative alors que le palier à air extérieur présente une rigidité positive.

3. Palier aérostatique selon la revendication 2, **caractérisé en ce que** la rigidité du palier aérostatique en tant que somme de la rigidité négative et de la rigidité positive est inférieure à 1 N/µm, de préférence inférieure à 0,1 N/µm.

4. Palier aérostatique selon l'une quelconque des revendications précédentes, **caractérisé en ce que** l'angle de conicité de la surface de glissement conique (G1) est réglable par un actionneur (VC).

5. Palier aérostatique selon la revendication 4, **caractérisé en ce que** l'actionneur (VC) agit sur un parallélogramme (P) formé par la première et la deuxième articulation (P1, P2) ainsi que par une troisième et une quatrième articulation (P3, P4) et qui est déformé par l'actionneur (VC), la surface de glissement conique (G1) formant un côté du parallélogramme (P) et un ressort à lames (F) formant un deuxième côté du parallélogramme (P) opposé au premier côté.

6. Palier aérostatique selon la revendication 4 ou 5, **caractérisé en ce que** l'actionneur (VC) est un moteur à bobine mobile.

7. Palier aérostatique selon la revendication 6, **caractérisé en ce que** le moteur à bobine mobile (VC) présente une culasse en forme de U (Y) dotée d'aimants et qui est reliée à la surface de glissement conique (G1), ainsi que d'une bobine annulaire (C) disposée mobile dans la culasse en forme de U (Y) et qui est reliée à l'arrivée d'air comprimé centrale (N1).

8. Palier aérostatique selon l'une quelconque des revendications précédentes, **caractérisé en ce que** les articulations (P1, P2, P3, P4) sont des articulations de flexion.
